# EUROPÄISCHE PATENTSCHRIFT

(11) **EP 1 254 875 B1**
(45) Veröffentlichungstag und Bekanntmachung des Hinweises auf die Patenterteilung: **07.01.2009**
(21) Anmeldenummer: 02009012.2
(22) Anmeldetag: 23.04.2002
(51) Int. Cl.: C04B 37/00, C04B 37/02

(54) **Verfahren zum Fügen eines Hochtemperatur-Werkstoff-Bauteilverbundes**
Method of joining a refractory material composite
Procédé de joindre un composite de materiau refractaire

(30) Priorität: 30.04.2001 AT 3372001 U
(43) Veröffentlichungstag der Anmeldung: 06.11.2002
(73) Patentinhaber: PLANSEE SE, 6600 Reutte (AT)
(72) Erfinder: Rödhammer, Peter, Dr., 6600 Ehenbichl (AT)

(56) Entgegenhaltungen:
- EP-A- 0 459 865
- EP-A- 1 025 938
- EP-B- 0 181 385
- DE-C- 3 936 991
- US-A- 2 667 427

## Beschreibung

Die Erfindung betrifft ein Verfahren zur Herstellung eines Bauteilverbundes aus Hochtemperaturwerkstoffen durch Fügen und Bauteilverbunde gemäß dem Oberbegriff der Ansprüche 1, 14 und 17 (siehe, z.B. EP-A-1 025 938).

Nichtmetallische Hochtemperaturwerkstoffe sind solche auf Kohlenstoff- oder Siliziumkarbidbasis, insbesondere auch kohlenstofffaserverstärkte Werkstoffe, wie z.B. kohlenstofffaserverstärkter Kohlenstoff (CFC), aber auch andere keramische Werkstoffe. Diese Werkstoffe weisen bei hohen Temperaturen höhere Festigkeiten auf als die hochschmelzenden Metalle und haben insbesondere im Vergleich zu diesen eine wesentlich niedrigere Dichte. Entsprechend liegt das technische Anwendungsfeld nichtmetallischer Hochtemperaturwerkstoffe zum einen bei Bauteilen, die Bewegungen mit großer Beschleunigung ausgesetzt sind, z.B. bei Fahrzeugen, insbesondere auch in der Luft- und Raumfahrt, zum anderen im Umfeld hoher Temperaturstrahlung, z.B. als Schutzwände mit Wärmetauscherfunktion, wie der ersten Wand von Fusionsreaktoren.
Weitere Anwendungen liegen im Bereich Drehanoden für Röntgenanlagen oder auch bei Chargenträger in Hochtemperaturöfen.

Aus nichtmetallischen Hochtemperaturwerkstoffen nach dem Stand der Technik gefertigte Bauteile und auf diese angewandte Fertigungsverfahren weisen neben diesen auszeichnenden Vorteilen eine Reihe von Nachteilen und Schwierigkeiten auf. Eine wesentliche Schwierigkeit beruht auf der schlechten Fügbarkeit dieser Werkstoffe. Übliche Verbindungsverfahren, wie Schweißen, Schrauben, Nieten, sind vielfach nicht oder allenfalls mit hohem Ausfallrisiko anwendbar. Ein Verlöten derartiger Werkstoffe ist einesteils wegen Benetzungsproblemen, insbesondere aber auch wegen der regelmäßig hohen Porosität derartiger Werkstoffe schwierig bzw. sogar unmöglich, da poröse Werkstoffe das Lotmaterial in unzureichend kontrollierbarer Weise aufsaugen. Die Restporosität derartiger Werkstoffe steht beispielsweise einem Einsatz als gasdichte Ummantelung von Vakuumgefäßen ebenso entgegen, wie der Nutzung als Rohrsystem für Gase und Flüssigkeiten. Die oft nur mäßige Korrosions- bzw. Oxidationsbeständigkeit derartiger Werkstoffe beschränkt ihr Einsatzfeld ganz wesentlich. Die Werkstoffe besitzen in vielen Fällen eine unzureichende Reaktionsbeständigkeit gegenüber flüssigen Metallen. Auch werden kohlenstofffaserverstärkte CFC- und C-SiC-Verbundwerkstoffe an Luft bereits unterhalb von 1.000°C durch Oxidation der Fasern rasch fortschreitend entfestigt.

Nichtmetallische Hochtemperaturwerkstoffe weisen zwar in der Regel bei hohen Temperaturen eine höhere Zug- und Druckfestigkeit auf als die hochwarmfesten Refraktärmetalle. Sie sind aber vergleichsweise spröde und versagen daher im Falle mit höherer Biege- und Wechselbelastungen.

Diesen, für einzelne nichtmetallische Hochtemperaturwerkstoffe unterschiedlich stark zutreffenden Nachteilen begegnet der Fachmann mit der Ausgestaltung von Werkstoffverbunden, bzw. Bauteilverbunden aus verschiedenartigen Werkstoffen, ggf. in Kombination mit metallischen Werkstoffen oder metallischen Hochtemperaturwerkstoffen, um die Nachteile dieser nichtmetallischen Werkstoffgruppe zu kompensieren oder zu verringern und gleichzeitig deren vorteilhafte Eigenschaften zu nutzen.
Die Bildung von Bauteilverbunden setzt ein aktives Fügen einzelner Bauteilkomponenten voraus. Die bereits genannten Risiken und Nachteile beim Fügen nichtmetallischer Hochtemperaturwerkstoffe zu einem Verbund engen die ansonsten denkbare Anwendungsvielfalt stark ein.

Ein Bauteilverbund wird beispielsweise in der EP 0 181 385 B1 beschrieben. Die aktiv gekühlte Einrichtung aus einem thermisch hoch belastbaren Material, wie Graphit, Karbid oder Keramik oder einem metallkeramischen Verbundwerkstoff, besitzt im Querschnitt runde Ausnehmungen, in die metallische Kühlmittelleitungen flächig eingelötet sind.
Dort werden im Querschnitt vorzugsweise kreisförmige metallische Rohrleitungen in halbkreisförmige Ausnehmungen in der Oberfläche eines Bauteiles eingelötet und gleichzeitig mehrere derartige Bauteile zu einem verlöteten Verbund zusammengefügt. Die Kühlrohre bestehen regelmäßig aus hochschmelzenden Metallen mit zu den thermisch hochbelastbaren Werkstoffen ähnlichen thermischen Ausdehnungskoeffizienten.
Bei diesem Bauteilverbund aus Hochtemperaturwerkstoffen ist nachteilig, dass sich die Rohre nicht ausreichend dauerhaft über die volle Rohrfläche in das thermisch hoch belastbare Material einlöten lassen und damit der erforderliche Wärmeübergang über die Rohrwandung zum Kühlmittel nicht langzeitig gegeben ist.

Die Patentanmeldung Nr. FR 2 785 664 A1 beschreibt einen Wärmeaustauscher aus einem gefügten Hochtemperaturverbundmaterial, sowie ein Verfahren zu seiner Herstellung. Das wandartige Bauteil ist aus einer Mehrzahl von verschiedenen Werkstoffen lagenweise aufgebaut.
In einer zunächst separat gefertigten Zwischenlage aus einem Hochtemperaturverbundmaterial, wie kohlenstofffaser-verstärkter Graphit, sind Kühlmittelkanäle in Form oberflächlicher Ausnehmungen ausgeformt. Die Zwischenlage ist umgeben von zwei Außenlagen, zum Einen aus einem Verbundmaterial auf Keramikbasis, z. B. C/SiC- und zum Anderen aus einem davon verschiedenen Hochtemperaturverbundmaterial, z.B. kohlenstoffverstärktem Kohlenstoff.
Wahlweise werden die Ausnehmungen in der Oberfläche der Zwischenlage vor dem Fügen zum Verbund mit einer auf dieser abgeschiedenen, metallischen Schicht versehen. Die Beschichtung dient dazu, die Kanaloberfläche gegenüber dem durchfließenden Kühlmittelmedium undurchlässig zumachen. Das Kühlmittel würde ohne diese Schicht in die üblicherweise poröse Struktur des Verbundwerkstoffes eindringen. Die drei Lagen des Verbundbauteiles werden miteinander verlötet, vorzugsweise mittels Einbringung einer Lötfolie zwischen die Fügeflächen.
Der wesentliche Nachteil eines derartigen Wärmetauscher-Verbundteiles ist die nicht ausreichend sicher beherrschte Verlötung der einzelnen Lagen bzw. Laminate des Verbundteiles über die jeweiligen Fügeflächen.
Die Verlötung ist unzureichend homogen und damit nicht auf Dauer haltbar. Es kommt beim Lötprozess zu thermischem Materialverzug und zu unerwünschten, die Materialeigenschaften nachteilig verändernden Schmelzreaktionen in den an die Lötschicht angrenzenden Randzonen der Verbundwerkstoffe.

Die DE 39 36 991 C1 beschreibt ein Explosionsverdichten zum Herstellen eines Metall - Keramik - Stoffverbundes. Aufgabe ist es, entsprechende Stoffverbunde schnell und vergleichsweise kostengünstig herzustellen, ohne aufwändige Vorverfahren zur Vorbereitung der einzelnen Komponenten vorschalten zu müssen.
Gemäß der Erfindung werden keramische Materialien in Pulverform in Hohlräume einer metallischen Matrix, beispielsweise in Rohre eingefüllt, die gebündelten Rohre werden in eine Metallkanne eingebracht, evtl. werden Hohlräume zwischen gebündelten Rohren zusätzlich mit Metallpulver gefüllt und der gekannte Verbund wird explosionsverdichtet.
Wie die Aufgabenstellung besagt, geht es um ein schnelles Verfahren, ohne Qualitätsansprüche anders als einen Stoffverbund zu schaffen. Geometrische Mindestanforderungen hinsichtlich der Bauteil-Endform, wie sie an einen strukturierten Bauteilverbund üblicherweise gestellt sind, können mittels dieses Verfahrens nicht befriedigt werden.

Die EP 1 025 938 A1 beschreibt ein Verfahren zur Herstellung eines thermisch hoch belastbaren Verbundbauteils. Es handelt sich dabei um ein Verfahren, ausgerichtet auf das Fügen von Graphit-Strukturteilen mit Strukturbauteüen aus aushärtbarem Kupfer. Das Graphit-Strukturteil wird vor dem Fügen durch einen HIP - Prozess an den Fügeflächen mit einer Kupferschicht versehen, üblicherweise mittels Hintergießen gemäß EP 0 663 670 A1. Der Verfahrensschritt der Schichtaufbringung, insbesondere durch Hintergießen, ist sehr aufwendig. Das Verfahren lässt sich nicht unproblematisch auf das Fügen anderer Hochtemperaturwerkstoffe zur Erzielung thermisch hoch belastbarer Bauteile übertragen.

Die EP 0 459 865 A1 nennt ein Verfahren zum Schützen einer keramischen Bauteiloberfläche gegen mechanische, thermische und chemische Oberflächenschäden. Dazu wird auf die Keramikoberfläche mittels bekannter Techniken, z.B. durch Aufpressen von Folien, eine erste Schicht und darüber eine zweite, duktile metallische Schicht aufgetragen und der so erhaltene Verbund wird einer Temperaturbehandlung zur Schaffung einer stoffschlüssigen Verbindung zwischen der Grenzflächen ausgesetzt. Die erste Schicht bezweckt eine Anpassung der unterschiedlichen thermischen Ausdehnungskoeffizienten von Metall und Keramik. Die zweite Schicht erfüllt die genannte Schutzfunktion. Bei diesem Verfahren handelt es sich nicht um ein Fügen zweier Strukturbauteile gemäß üblicher Definition.
Entsprechend werden dort keine Anforderungen an eine große mechanische Hochtemperaturfestigkeit gestellt und erfüllt, wie diese vergleichsweise an gefügte Strukturbauteile gestellt.

Aufgabe vorliegender Erfindung ist es daher, die Nachteile der zuvor beschriebenen, gefügten Bauteilverbunde mit zumindest einem Strukturbauteil aus einem nichtmetallischen Hochtemperaturwerkstoff zu vermeiden. Dazu soll ein verbessertes Herstellungsverfahren dienen, das eine dauerhaft zuverlässige, möglicht stoffschlüssige Fügezone zwischen einzelnen Strukturbauteilen gewährleistet.
Das verbesserte Verfahren soll insbesondere auch eine erweiterte Anwendungsvielfalt für derartige Bauteilverbunde in diejenigen Bereiche eröffnen, wo die hohe Restporosität, mäßige Korrosionsbeständigkeit und mangelnde mechanische und thermische Wechselbeanspruchbarkeit nichtmetallischer Hochtemperaturwerkstoffe bisher einen entsprechenden Einsatz bisher unmöglich gemacht haben.

Ein Verfahren und Bauteilverbunde gemäß der Erfindung sind im Ansprüche 1, 14 und 17 definiert.

Die Unteransprüche beschreiben bevorzugte Ausgestaltungen des erfindungsgemäßen Verfahrens.

Metallische Hochtemperaturwerkstoffe sind die hochschmelzenden Metalle oder Refraktärmetalle, insbesondere die Metalle der V. und VI. Nebengruppe des periodischen Systems, aber daneben auch andere Metalle mit einem Schmelzpunkt > 1800°C.

Der Begriff Hochtemperaturwerkstoff umfasst die eingangs aufgeführten metallischen und nichtmetallischen Werkstoffgruppen. Er ist nicht auf diese beschränkt.
Der Begriff Strukturbauteile besagt, dass es sich um geformte Bauteile bzw. Komponenten handelt, die vielfach bereits auf Sollabmessungen gebracht sind und wahlweise komplex geformte Ausnehmungen in ihrer Oberfläche aufweisen können, z.B. Nuten und Halbschalenausnehmungen zur späteren Nutzung im gefügten Bauteilverbund als Kühlmittelleitungen.

Der Kannungsprozess ist ebenso wie das Matrizenpressen oder das Isostatische Pressen ein vor allem in der Pulvermetallurgie verbreitet angewandtes und technologisch ausgereiftes Verfahren.
Mittels des Kannens werden in einer Metallfolie als Kanne eingeschlossene Werkstoffe vakuumdicht verschlossen, so dass es beim anschließenden Pressen zu keinem Stoffaustausch zwischen Kanneninhalt und dem druckübertragenden umgebenden Medium kommen kann. In der Pulvermetallurgie werden Werkstoffe zwecks Werkstoffsynthese aus verschiedenen Pulverkomponenten oder zum Nachverdichten poröser Werkstoffe gekannt und dann gepresst, oder heißgepresst. Auch das Fügen von Bauteilverbunden aus einzelnen verpressten Komponenten durch Heißpressen oder heißisostatisches Pressen ist in der Pulvermetallurgie bekannt.
Im Unterschied zum Stand der Technik, wo die zu fügenden Teile bzw. Komponenten oder Strukturbauteile, jedes für sich längs der Fügeflächen ungekannt direkt aneinander gelegt, gemeinsam gekannt und dann zum oben angeführten Zweck in einem einzigen Schritt durch isostatisches bzw. heißisostatisches Pressen gefügt werden, wird beim erfindungsgemäßen Verfahren alles auf das Ziel der form- oder besser stoffschlüssigen Anformung der Kannenfolie an die Oberfläche der Strukturbauteile und an deren komplexe Oberflächenausnehmungen hin ausgerichtet - angefangen von der Auswahl des Kannenmaterials und seiner Dimensionierung, über das Kannendesign bis hin zu den Verfahrensparametern des heißisostatischen Pressens. Der Verdichtungseffekt wird im Fall vorliegender Erfindung allenfalls als vorteilhafter Nebeneffekt genutzt.

Am Schluss einer ersten Stufe des erfindungsgemäßen Verfahrens liegt somit ein Strukturbauteil aus einem nichtmetallischen Hochtemperaturwerkstoff vor, das zur Gänze, oder im Falle anschließender gezielter, nur bereichsweise spanabhebender Bearbeitung zumindest an den vorgesehenen Fügeflächen metallisch ummantelt und das sich daher hinsichtlich seiner Weiterverarbeitbarkeit durch Fügen wie ein metallisches Strukturbauteil aus dem Kannenmaterial als Bauteilwerkstoff darstellt.
Daher lassen sich erfindungsgemäß ummantelte Strukturbauteile gleichermaßen wie für Metalle mittels bekannter und bewährter Fügeverfahren durch Hartlöten, Schweißen, Heißpressen oder heißisostatisches Pressen fügen. Das Fügen durch heißisostatisches Pressen von in Folien aus hochschmelzenden Metallen gekannten Strukturbauteilen hat sich besonders bewährt.
Somit liegt für den Verfahrensschritt des Fügens zum Bauteilverbund ein Strukturbauteil mit Eigenschaften eines nichtmetallischen Hochtemperaturwerkstoffes vor, welches jedoch die Nachteile mangelnder Fügbarkeit von nichtmetallischen Hochtemperaturwerkstoffen nicht mehr oder in stark verringertem Umfang aufweist. Weiters lassen sich Bauteilverbunde mit innenliegenden, metallisch dicht ausgekleideten Hohlräumen bzw. Kanälen auf vergleichsweise einfache Art und mit vergleichsweise geringem Aufwand herstellen.
Das erfinderische Fügeverfahren ist prozesstechnisch gut kontrolliert durchführbar. Dadurch lässt sich die jeweils angestrebte Kombination von Bauteileigenschaften mit großer Zuverlässigkeit und Wiederholbarkeit erreichen.

Nach dem Verfahren laut Erfindung ergeben sich, anders als beim Fügen von Strukturbauteilen aus nichtmetallischen Hochtemperaturwerkstoffen durch Hartlöten gemäß Stand der Technik, eine Reihe von höchst vorteilhaften Wirkungen und Werkstoffeigenschaften.
So ist beim erfindungsgemäßen Verfahren auf Grund der in beiden Verfahrensstufen gleichermaßen gegebenen, stoffmäßigen Symmetrie des jeweils entstehenden Verbundes eine unerwünschte Formänderung durch Materialverzug weitestgehend ausgeschlossen.

Andererseits können aber geschmolzene Hochtemperaturlote aggressive chemische Reaktionen mit den angrenzenden Werkstoffen auslösen, ein Vorgang, der beim Hartlöten nach dem Stand der Technik vielfach in Kauf genommen werden muss. Insbesondere können durch die Lotschmelze angrenzende Bauteilzonen lokal soweit angelöst werden, dass die Versiegelung des Strukturbauteiles gegenüber dem Eindringen von Schmelze nicht mehr gewährleistet ist. Das Fügen mittels Hartlöten von Strukturbauteilen zu Bauteilverbunden gemäß vorliegender Erfindung wird daher auf Anwendungsfälle beschränkt bleiben, wo die Lotschmelze keine derartigen Nachteile ergibt.

Beim heißisostatischen Pressen oder Heißpressen gemäß Erfindung liegen die Temperaturen bei 0,3 bis 0,6 x T_{M}, typischerweise 40 % der Schmelztemperatur T_{M} des niedrigstschmelzenden an die Verbindungsfläche angrenzenden metallischen Bestandteils. Demgegenüber liegen die Schmelztemperaturen des Lotes beim Hartlöten gemäß Stand der Technik aus Festigkeitsgründen deutlich höher als die höchstmögliche Einsatztemperatur eins Strukturbauteils. Aus diesem Grund weist das erfinderische Verfahren bezüglich mechanischer Belastbarkeit des Verbundes, Verbundspannungen und Materialverzug sowie bezüglich unerwünschter chemischer Nebenreaktionen starke Vorteile gegenüber dem Verfahren nach dem Stand der Technik auf.

Mittels des Heißpressens oder heißisostatischen Pressens von Kannungsfolie gemäß vorliegender Erfindung lassen sich konturgetreue und stoffschlüssige, sowie vergleichsweise einheitlich dicke, hochvakuumdichte metallische Überzüge aufbringen. Demgegenüber lassen sich beim metallischen PVD- oder CVD-Gasphasenbeschichten von anschließend zu fügenden Flächen mit Oberflächenausnehmungen nach dem Stand der Technik, die gefügt als Kanäle zur Durchleitung von Kühlflüssigkeiten dienen, in der Praxis in Bereichen von Ausnehmungen keine einheitlich dicken und/oder gasdichten Metallschichten formieren.

Für Bauteilverbunde gemäß Erfindung, siehe Ansprüche 14 und 17, z.B. aktiv gekühlte Bauteilverbunde im Einsatzbereich T < 900°C, haben sich Kupferlegierungen als Kannungsmaterial besonders bewährt, aber auch Nickel, Aluminium, Edelmetalle und selbst Eisenlegierungen wurden erfolgreich eingesetzt.

Die hohen Schmelz- oder Zersetzungspunkte von nichtmetallischen Hochtemperaturwerkstoffen empfehlen die hochschmelzenden Metallen, insbesondere Wolfram, Molybdän, Tantal, Niob, Titan und deren Legierungen als Kannungswerkstoffe für Anwendungen bei Einsatztemperaturen oberhalb 1000°C.

Die Wandstärke der als Kanne aufgebrachten metallischen Ummantelung liegt erfindungsgemäß zwischen 10 und 2000 µm. Sie richtet sich nach den Abmessungen der nachzubildenden Oberflächenstrukturen, nach den mechanischen und/oder korrosiven Belastungen des Strukturbauteils und nach den mechanischen, thermomechanischen und korrosionschemischen Eigenschaften des Kannenmaterials. In der Regel wird die Stärke des Kannenbleches so niedrig wie nötig, vorzugsweise zwischen 10 und 500 µm gehalten.

Die Wandstärke der Kannungsfolie ist andererseits so hoch zu wählen, dass selbst bei lokalen Dehnungen von mehr als 100 %, wie sie unter superplastischen Umformbedingungen eintreten können, das erforderliche Mindestmaß nicht unterschreitet - z.B. aus Gründen der Gasdichtheit oder der mechanischen Stabilität.
Das Risiko von lokalen Überdehnungen des Kannenmaterials lässt sich vorteilhaft durch Designanpassungen, wie zum Beispiel durch die Abrundung von Kanten vermeiden.

Dickere metallische Innenauskleidungen führen zu vergleichsweise höherer mechanischer Belastbarkeit des Bauteilverbundes, z.B. gegenüber dem Innendruck des Kühlmediums.

Das erfindungsgemäße Aufbringen eines Kannenmaterials auf die später als Kühlkanal dienenden Oberflächenausnehmungen eines Strukturbauteiles ist somit ein weit flexibleres und wirtschaftlicheres Verfahren als beispielsweise das Einlöten von metallischen Rohren in das Innere eines Bauteilverbundes aus einem nichtmetallischen Hochtemperaturwerkstoff gemäß dem bekanntem Stand der Technik.

Die metallische Ummantelung der Strukturbauteile an den Fügeflächen und/oder über den gesamten Bauteilverbund wird auf Grund ihrer wesentlich höheren Duktilität in der Regel die Festigkeit des gesamten Verbundteiles insbesondere gegenüber Schlagbeanspruchungen, zyklisch wechselnden Lasten oder Biegebelastungen deutlich erhöhen. Dieser Vorteil ist insbesondere in Ausführungen bedeutsam, in denen die Bauteilverbunde ausschließlich aus nichtmetallischen Hochtemperaturwerkstoffen bestehen und keine Stützlagen aus Metall besitzen.

Das Anformen der Kannungsfolie an die Oberfläche des Strukturbauteiles erfolgt erfindungsgemäß durch Pressen bzw. Heißpressen. Die dabei einzustellende Temperatur ist verfahrensabhängig und richtet sich nach der Plastizität des Kannenmaterials. Soweit technisch sinnvoll sind die Temperaturen in Verbindung mit den Presszeiten so zu wählen, dass neben dem konturnahen Anbinden der Folien an das Grundmaterial auch ein stoffschlüssiges Anbinden bei gegenseitiger Diffusion gewährleistet ist. Dabei genügt in der Regel eine Diffusionszone zwischen 0,1 und 10 µm. Vorzugsweise erfolgt die Anformung der Kanne an den Strukturbauteil bei homologen Temperaturen des Kannenmaterials im Bereich T = 0,3 - 0,6 x T_{M} als dem Schmelzpunkt des Kannenmaterials.

Der bei Bauteilen gemäß Stand der Technik häufig beobachtete Nachteil, nämlich Bereiche von Fügeflächen ohne stoffschlüssige Verbindung, wie zum Beispiel infolge nicht mit Lot benetzter Flächen beim Löten, sowie das gefürchtete unbemerkte Ablösen auch nur einzelner Flächenbereiche speziell beim Abkühlen eines als Wärmetauscher dienenden Verbundbauteiles, ist beim Fügen gemäß Erfindung praktisch auszuschließen.
Durch die äußere Druckaufbringung auf die Strukturbauteile beim Ummanteln sowie auf den Bauteilverbund beim Fügen gemäß Erfindung wird, je nach Prozessbedingungen (Druck, Temperatur, Dauer) ,fallweise eine spürbare Verdichtung der üblicherweise porösen nichtmetallischen Hochtemperaturwerkstoffe erzielt und damit sowohl eine Verbesserung der mechanischen Eigenschaften als auch der Dichtheit gegen das unerwünschte Eindringen umgebender gasförmiger Medien erreicht. Der damit einhergehende Schwund in den äußeren Bauteilabmessungen ist durch vorbeugende Maßnahmen zu berücksichtigen.

Nichtmetallische Werkstoffe weisen vielfach Oberflächenrauhigkeiten, wie Makroporen und Bearbeitungsriefen unterschiedlicher Größe und Tiefe auf. Diese werden, soweit machbar, durch das Kannungsmaterial überspannt und nicht konturnah ausgeformt. Entsprechend wird die Foliendicke größer als die Abmessungen dieser Oberflächenrauhigkeiten zu wählen sein. Die so erhaltene Oberfläche der ummantelten Komponente ist dann wesentlich glatter als jene des zu fügenden Ausgangsmaterials, was in der Regel im darauffolgenden Fügeschritt zum Bauteilverbund zu einer höheren Qualität der Verbindung führt.

In Durchführung des erfinderischen Verfahrens können neben der Legierungsbildung auch störende chemische Reaktionen zwischen dem Hochtemperaturwerkstoff des Strukturbauteiles und dem Werkstoff des Kannungsmaterials auftreten. So können z.B. spröde Verbindungen, wie Karbide oder niedrigschmelzende Silizide entstehen. In derartigen Fällen wird die Metallfolie vor dem Kannen an ihrer Innenseite z.B. mittels eines Gasphasenprozesses mit einer dünnen Reaktionssperrschicht beschichtet. Bei der Ummantelung von graphit- und kohlenstoffhaltigen Hochtemperaturwerkstoffen hat sich eine Innenbeschichtung aus Rhenium, einem als Nicht-Karbidbildner bekannten Metall, besonders bewährt.
Ein anderer wichtiger Grund für die fallweise Beschichtung von metallischen Folien vor dem Kannungsprozess ist der Korrosionsschutz gegenüber Kühlmedien, soweit die Bauteilverbunde als aktiv gekühlte Bauteile mit Kühlleitungen gefertigt werden.

Ein besonderer Vorteil des erfinderischen Verfahrens liegt in der Möglichkeit zur Fertigung von Bauteilverbunden mit komplex geformte Strukturausnehmungen in den Fügeflächen der einzelnen Strukturbauteile, z.B. eines Netzes von Kühlkanälen. Das oberflächliche Ausformen und anschließende Fügen, insbesondere von in zwei Teilen spiegelbildlich gefertigter Oberflächenausnehmungen, gestattet komplexe Querschnitte und Anordnungen dieser innenliegenden Strukturen und erspart hohe Fertigungskosten, die bei alternativen Verfahren mit der Ausgestaltung entsprechender Hohlraumsysteme im Vollkörper anfallen würden.

Nach einer vorteilhaften Ausgestaltung des erfindungsgemäßen Verfahrens wird ein im Kannenmaterial weitgehend unlöslicher Zusatzwerkstoff mit niedrigerem Schmelzpunkt als jenem des Kannenmaterials beispielsweise in Form eines Bleches oder von Pulver zwischen Kannenblech und nichtmetallischen Hochtemperaturwerkstoff eines Strukturbauteiles beigegeben. Insbesondere wird bei hochporösen Hochtemperaturwerkstoffen auf Kohlenstoffbasis, wie z.B. CFC mit in der Regel 10 bis 20 Vol.% Restporosität, Kupfer als pulverförmiges Material oder Blechfolie in eine Kanne aus einer Nioblegierung in einer auf das Porenvolumen abgestimmten Menge beigegeben. Beim anschließenden heißisostatischen Pressen wird die Temperatur mit 1100°C bis 1300°C so abgestimmt, dass das pulverförmige Kupfer schmelzflüssig wird und in die Poren des Hochtemperaturwerkstoffes eindringt. Durch ein derartiges Verfahren lassen sich gleichzeitig mit dem Verbindungsschritt die Eigenschaften von porösen Hochtemperaturwerkstoffen gezielt modifizieren.

Der metallische Kannungswerkstoff kann nach dem Matrizenpressen oder isostatischen Pressen des Bauteilverbundes von dessen an der Oberfläche bis zum darunterliegenden Material mechanisch, z.B. spanend abgetragen werden. Er wird jedoch fallweise im Bauteilverbund bereichsweise oder zur Gänze belassen werden, vor allem dann, wenn der Hochtemperaturwerkstoff selbst eine schlechte mechanische Stabilität, z.B. eine niedrige Bruchzähigkeit, aufweist.

Das erfinderische Verfahren wird an Hand der nachfolgenden Ausführungsbeispiele näher beschrieben.

### Beispiel 1

beschreibt die Herstellung eines für aktive Kühlung vorgesehenen Wandelementes aus kohlefaserverstärktem Siliziumkarbid mit innenliegenden Kühlkanälen. Zwei Strukturbauteile mit den Abmessungen 250 x 140 x 10 mm, werden mit Ta-Folien der Stärke 0.25 mm vakuumdicht gekannt und bei Temperaturen zwischen 1100°C und 1400°C und mit Argon als Druckmedium bei Druck zwischen 50 und 100 x 10⁶ Pa 1 - 2 Stunden lang heißisostatisch gepresst. Nach diesem Schritt waren die Folien konturgetreu an die Ausnehmungen im Grundmaterial angeformt. Schliffuntersuchungen an Vergleichsproben bestätigten einen stoffschlüssigen Verbund zwischen Ta und dem Siliziumkarbid in Ausbildung einer dünnen Zwischenschicht aus Tantalsiliziden. Die für das Verschweißen der Kannen genutzten umfangseitigen Überstände der Ta-Ummantelung beider Strukturbauteile wurden abgelängt und unter Beilegung von kurzen Stäben aus massivem Ta zur Abdeckung der Nuten in den Bauteiloberflächen vakuumverschweißt. Die derart mechanisch in ihrer Lage zueinander fixierten, jeweils ummantelten Strukturbauteile wurden bei gleichen Verfahrensparametern wie oben heißgepresst und stoffschlüssig miteinander verbunden. Durch Aufbohren der in die Nuten eingelegten Stäbe und nach einer abschließenden Umfangbearbeitung erhielt man den fertigen Bauteilverbund aus kohlefaserverstärktem Siliziumkarbid mit innenliegenden Kühlkanälen.

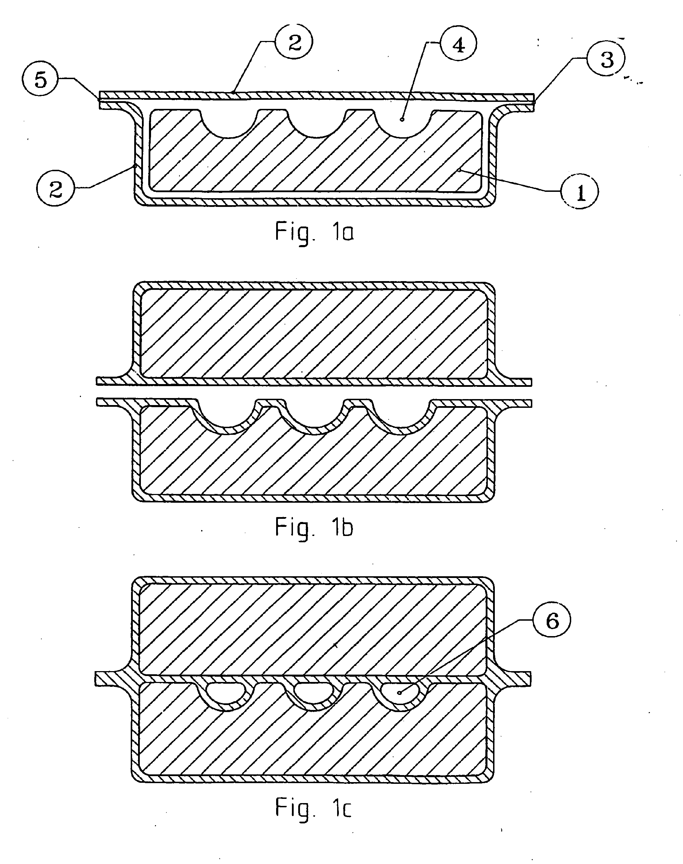

Figur 1a zeigt schematisch einen Querschnitt durch ein (nichtmetallisches) Strukturbauteil (1) mit Längsnuten (4), in einer aus Blechfolie (2) geformten metallischen Kanne, die nach einem Evakuierprozess an den Rändern längs einer Schweißnaht (5) verschweißt ist.
Figur 1b zeigt schematisch einen Querschnitt durch zwei übereinander angebrachte (nichtmetallische) gekannte Strukturbauteile mit durch äußere Druck/Temperatureinwirkung gemäß Erfindung konturgetreu und stoffschlüssig angeformtem Kannenblech.
Figur 1c zeigt den erfindungsgemäß gefügten Bauteilverbund nach dem nochmaligen Kannen der beiden ummantelten Strukturbauteile und Fügen durch Druck/Temperatureinwirkung gemäß der Beschreibung. Durch das Fügen entstehen aus Oberflächenausnehmungen in einem Strukturbauteil geschlossene Kanäle (6).

Sowohl die Einzelkomponenten als auch das gefügte Kühlelement weisen eine Planarität von besser als 0,2 mm über die Baulänge von 250 mm auf. Die Kanäle weisen einen einheitlichen Querschnitt ohne Verengungen auf und waren hochvakuumdicht. Der Verbund hielt dem geforderten Prüfdruck in den Kanälen von 80 bar ohne Schädigung stand. Die an einer ummantelten Vergleichsprobe gemessene Raumtemperatur-Biegefestigkeit lag um 35 % höher als die einer Referenzprobe gleichen Gesamtquerschnitts aus nicht ummanteltem Grundmaterial.

### Beispiel 2

beschreibt die Herstellung eines Rohres aus kohlenstofffaserverstärktem Kohlenstoff (CFC) mit Kanälen für ein durchströmendes Kühlmittel zur aktiven Kühlung. Das Rohr wird aus zwei Strukturbauteilen gefertigt, einem Innenrohr mit 193 mm Innen- und 203,5 mm Außendurchmesser und einem Außenrohr mit einem Innendurchmesser 207 mm und einem Außendurchmesser von 218 mm. Die Rohrlänge betrug jeweils 400 mm. In die Außenoberfläche des Innenteils war eine halbzylinderförmige Spiralnut von 3 mm Radius als späterer Kühlkanal eingefräst. Die Nut endete hierbei jeweils etwa 5 mm vor dem Rohrende, so dass dort der zylindrische Querschnitt erhalten blieb. Innenteil und Außenteil wurden mittels 1,0 mm dicken Niobblechen gekannt. Vor dem Kannen wurde das Niobblech mittels lonenplattieren einseitig mit einer 20 µm dicken Rheniumschicht beschichtet. Die beschichtete Blechoberfläche war beim Kannen dem CFC zugewandt.

Daraufhin wurde jedes der beiden Teile bei 1350°C und einem Druck von 70 x 10⁶ Pa über einen Zeitraum von 4 Stunden heißisostatisch gepresst. Dabei wurden die Niobbleche an die Kontur der Rohroberflächen angeformt und untrennbar mit diesen verbunden. Anschließend wurde der Außenumfang des Innenrohres und der Innenumfang des Außenrohres auf eine Passung von ca. 0,25 mm Durchmesserspiel spanabhebend überarbeitet. Ebenso wurden die überkragenden Kannenränder abgedreht. Dann wurden die beiden Rohrteile übereinander geschoben und die Rohrenden jeweils mittels einer Niobfolie mit dem das Rohr konturnahe überdeckenden Niobfolie verschweißt. Das derart zusammengebaute Doppelrohr wurde schließlich bei 1350°C und 100 x 10⁶ Pa heißisostatisch gepresst und dadurch stoffschlüssig gefügt. Abschließend wurde das so entstandene Verbundrohr am Außenumfang überschliffen. Die verbleibende Wandstärke des Niobmantels betrug ca. 0,5 mm. Die beiden Rohrenden wurden innerhalb der Stärke des Niobüberstandes plangedreht und die Spiralnut jeweils stirnseitig aufgebohrt.
Die Untersuchung des so entstandenen Werkstoffverbundes im Querschliff ergab in der Wandstärke gleichmäßig und konturgetreu mit Niob ausgekleidete Kühlkanäle. Die ursprüngliche Trennfläche zwischen dem Innen- und dem Außenteil war nach der beim heißisostatischen Pressen erfolgten Werkstoffdiffusion und dem gleichzeitigen Kornwachstum völlig verschwunden. Die Kühlkanäle erwiesen sich im Lecktest als hochvakuumdicht. Die Grenze der mechanischen Belastbarkeit des so hergestellten Bauteilverbundes war durch die Zug- bzw. Scherfestigkeit des CFC begrenzt, nicht durch die Festigkeit der Fügefläche.

### Beispiel 3

beschreibt die Herstellung einer Röntgendrehanode mit rückseitig aufgebrachtem CFC.
Eine zylindrische Scheibe aus CFC (kohlenstofffaserverstärkter Kohlenstoff), mit Durchmesser 150 mm und Stärke 50 mm, wurde in eine topfförmige Kanne aus Nb-Blech, Stärke 1,0 mm, vakuumdicht eingeschweißt. Das Kannenblech war CFC-seitig mit einer Re-Schicht, Stärke 20 µm, beschichtet. An einer Seite der CFC-Scheibe war eine als Teil der Kanne in den Topfboden eingelegte Welle in Form eines zylindrischen Stabes aus Ta10W zentriert in bezug auf die Drehachse der Scheibe mit eingeschweißt worden. Der so gekannte Bauteil wurde evakuiert und anschließend bei einer Temperatur von 1500°C bis 1800°C und einem Druck von 100 - 200 x 10⁶ Pa über 4 bis 6 Stunden heißisostatisch gepresst. Dabei wurden das Kannenblech und die Ta10W-Welle stoffschlüssig an den CFC-Bauteil angefügt. Der so erhaltene allseitig Nb-ummantelte CFC-Teil wurde unter Ausnutzung eines kragenförmigen Überstandes der Kanne mit einer auf den Teil gesetzten Ronde aus der Molybdänlegierung TZM samt Brennbahnbelag aus W10Re
vakuumverschweißt und bei 1400°C und einem Druck von 80 x 10⁶ Pa über 4 Stunden heißisostatisch gepresst. Abschließend wurde die Röntgendrehanode durch Freischleifen der Brennbahn und mittels Konturdrehen der sonstigen Außenflächen fertiggestellt.

Im Vergleich zu durch Löten hergestellten Verbunden von TZM und CFC zeichnet sich das erfindungsgemäße Verfahren durch hohe Reproduzierbarkeit und wesentlich höhere Verbundfestigkeit aus. Im Schleudertest wies die erfindungsgemäß hergestellte Drehanode eine deutlich höhere Berstzahl als die Vergleichsanode auf. Dieses überraschende Ergebnis wird auf die durch die Nb-Kanne auf den CFC-Teil ausgeübten Druckspannungen sowie auf die gesteigerte Verbundfestigkeit zurückgeführt.

## Patentansprüche

1. Verfahren zur Herstellung eines Bauteilverbundes durch Fügen mindestens eines nichtmetallischen (1) mit einem oder mehreren metallischen (2) oder nichtmetallischen (1) Strukturbauteilen aus Hochtemperaturwerkstoffen, mit oder ohne darin eingearbeiteten Oberflächenausnehmungen und unter Einbindung einer stoffschlüssig auf das nichtmetallische Strukturbauteil (1) aufgebrachten Metall-Zwischenschicht (2) zumindest an der/den Fügefläche(n),
**dadurch gekennzeichnet,**
**dass** auf die Oberfläche zumindest eines Strukturbauteiles (1) aus einem nichtmetallischen Hochtemperaturwerkstoff, einschließlich der Flächen von Ausnehmungen (4) in dessen Oberfläche, eine gasdichte, 10 - 2000 µm dicke Metallfolie (2) mittels Kannungprozesses und anschließenden Matrizenpressens oder Isostatischen Pressens konturnah aufgebracht wird und dass daraufhin die einzelnen Strukturbauteile (1) an der/den Fügefläche(n) verlötet, verschweißt und/oder gemeinsam in einer Metallfolie (2) gekannt und mittels Heißpressens oder mittels heißisostatischen Pressens stoffschlüssig zum Bauteilverbund (1) gefügt werden.

2. Verfahren zur Herstellung eines Bauteilverbundes nach Anspruch 1, **dadurch gekennzeichnet, dass** als Werkstoff für mindestens ein nichtmetallisches Strukturbauteil (1) kohlefaserverstärkter Kohlenstoff und/oder Graphit und/oder faserverstärktes Siliziumkarbid verwendet werden.

3. Verfahren zur Herstellung eines Bauteilverbundes nach Anspruch 1 und 2, **dadurch gekennzeichnet, dass** als Werkstoff für mindestens ein nichtmetallisches Strukturbauteil (1) Karbide, Nitride und/oder Oxidkeramik verwendet werden.

4. Verfahren zur Herstellung eines Bauteilverbundes nach Anspruch 1 bis 3, **dadurch gekennzeichnet, dass** als Kannungswerkstoff eine 10 bis 500 µm dicke Metallfolie (2) aus einem hochschmelzenden Metall verwendet wird.

5. Verfahren zur Herstellung eines Bauteilverbundes nach Anspruch 4,
**dadurch gekennzeichnet, dass** als Kannungswerkstoff eine Folie aus Ta, Nb oder einer Ta-bzw. Nb-Basislegierung verwendet wird.

6. Verfahren zur Herstellung eines Bauteilverbundes nach Anspruch 1 bis 5,
**dadurch gekennzeichnet, dass** zwei gekannte und mit der Metallfolie (2) stoffschlüssig verbundene Strukturbauteile (1) mit zur Fügefläche spiegelbildlich symmetrischen Oberflächenausnehmungen stoffschlüssig gefügt werden.

7. Verfahren zur Herstellung eines Bauteilverbundes nach Anspruch 1 bis 6,
**dadurch gekennzeichnet, dass** als Metallfolie (2) eine mittels CVD- oder PVD-Verfahren einseitig mit Rhenium beschichtete Tantal- oder Wolframfolie verwendet wird.

8. Verfahren zur Herstellung eines Bauteilverbundes nach Anspruch 1 bis 7,
**dadurch gekennzeichnet, dass** als Ummantelung der Strukturbauteile (1) Metallfolien (2) mit einer Stärke zwischen 50 µm und 200 µm verwendet werden.

9. Verfahren zur Herstellung eines Bauteilverbundes nach Anspruch 1 bis 8, **dadurch gekennzeichnet, dass** das Matrizenpressen als Heißpressen, das Isostatische Pressen als heißisostatisches Pressen durchgeführt wird.

10. Verfahren zur Herstellung eines Baüteilverbundes nach Anspruch 8,
**dadurch gekennzeichnet, dass** beim einzelnen Strukturbauteil (1) mittels des Heißpressens oder heißisostatischen Pressens eine stoffschlüssige Verbindung zwischen Strukturbauteil (1) und Kannungsfolie (2) hergestellt wird.

11. Verfahren zur Herstellung eines Bauteilverbundes nach Anspruch 1 bis 10,
**dadurch gekennzeichnet, dass** auf mindestens einem Strukturbauteil (1) vor dem Kannen zumindest auf Teilbereichen seiner Oberfläche eine geschlossene Metallschicht mittels Abscheidung aus der Gasphase aufgebracht wird.

12. Verfahren zur Herstellung eines Bauteilverbundes nach Anspruch 1 bis 11, **dadurch gekennzeichnet, dass** ein nichtmetallisches Strukturbauteil (1) mit zusätzlich mindestens einem metallischen Strukturbauteil in eine gemeinsame Metallfolie eingekannt und gefügt wird.

13. Verfahren zur Herstellung eines Bauteilverbundes nach Anspruch 1 bis 12, **dadurch gekennzeichnet, dass** nach dem Fügen das Kannungsmaterial von der Außenoberfläche des Bauteilverbundes (1) ganz oder teil- bzw. bereichsweise mechanisch abgetragen wird.

14. Bauteilverbund, hergestellt nach dem Verfahren gemäß Anspruch 1 bis 13 bestehend aus mehreren Strukturbauteilen (1) aus metallischen und/oder nichtmetallischen Hochtemperaturwerkstoffen,
**dadurch gekennzeichnet,**
**dass** dieser ein Bauteil eines Triebwerkes für Flugzeuge oder Raumflugkörper ist und wenigstens ein nichtmetallisches Strukturbauteil (1) aufweist, auf dem eine gasdichte,10 bis 2000 µm dicke Metallfolie (2) mittels Kannungsprozess und anschließenden Matrizenpressens oder Isostatischen Pressens konturnah aufgebracht ist und wobei diese mehrere Strukturbauteile (1) in einer Verbindungszone zwischen dieser Metallfolie (2) und einem dieser Strukturbauteile (1) durch Verlöten, Verschweißen, oder mittels Heißisostatischen Pressens verbunden sind.

15. Bauteilverbund nach Anspruch 14, **dadurch gekennzeichnet, dass** Ausnehmungen (4) in der Oberfläche eines Strukturbauteiles (1) im Bauteilverbund als Hohlräume (6) ausgebildet sind.

16. Bauteilverbund nach Anspruch 15, **dadurch gekennzeichnet, dass** die Hohlräume (6) als Kanäle für diese durchströmende Kühlmedien ausgeformt (6) sind.

17. Bauteilverbund, hergestellt nach dem Verfahren gemäß Anspruch 1 bis 13 bestehend aus mehreren Strukturbauteilen (1) aus metallischen und/oder nichtmetallischen Hochtemperaturwerkstoffen,
**dadurch gekennzeichnet,**
**dass** dieser eine Röntgendrehanode aus mindestens einem Strukturbauteil aus einem Werkstoff auf Kohlenstoffbasis und aus mindestens einem weiteren Strukturbauteil aus Refraktärmetall ist und dass wenigstens auf einem nichtmetallischen Strukturbauteil (1) eine gasdichte, 10 bis 2000 µm dicke Metallfolie (2) mittels Kannungsprozess und anschließenden Matrizenpressens oder Isostatischen Pressens konturnah aufgebracht ist und wobei diese mehrere Strukturbauteile (1) in einer Verbindungszone zwischen dieser Metallfolie (2) und einem dieser Strukturbauteile durch Verlöten, Verschweißen, oder mittels Heißisostatischen Pressens verbunden sind.

## Claims

1. Method for producing a composite component by joining at least one non-metallic structural component (1) to one or more metallic (2) or non-metallic (1) structural components made of refractory materials, with or without surface recesses worked therein and while incorporating a metal intermediate layer (2) applied to the non-metallic structural component (1) to form a material joint, at least on the joining surface(s), **characterised in that** a gas-tight, 10-2000 µm-thick metal foil is applied in a contour-following manner to the surface of at least one structural component (1) made of a non-metallic refractory material, including the surfaces of recesses (4) in the surface thereof, by means of a canning process and subsequent die pressing or isostatic pressing, and **in that** the individual structural components (1) are then soldered or welded at their joining surface(s) and/or are canned jointly in a metal foil (2) and connected by a material joint by means of hot pressing or hot isostatic pressing to form a composite component (1).

2. Method for producing a composite component according to Claim 1, **characterised in that** carbon fibre reinforced carbon and/or graphite and/or fibre reinforced silicon carbide is/are used as the material for at least one non-metallic structural component (1).

3. Method for producing a composite component according to Claims 1 and 2, **characterised in that** carbides, nitrides and/or oxide ceramics are used as the material for at least one non-metallic structural component (1).

4. Method for producing a composite component according to Claims 1 to 3, **characterised in that** a 10 to 500 µm-thick metal foil (2) made of a high-melting-point metal is used as the canning material.

5. Method for producing a composite component according to Claim 4, **characterised in that** a foil of Ta, Nb or a Ta- or Nb-based alloy is used as the canning material.

6. Method for producing a composite component according to Claims 1 to 5, **characterised in that** two structural components (1), which are canned and connected to the metal foil (2) with a material joint and which have surface recesses which are mirror-symmetrical with respect to the joining surface, are connected with a material joint.

7. Method for producing a composite component according to Claims 1 to 6, **characterised in that** a tantalum or tungsten foil coated on one side with rhenium by means of a CVD or PVD process is used as the metal foil.

8. Method for producing a composite component according to Claims 1 to 7, **characterised in that** metal foils (2) with a thickness from 50 µm to 200 µm are used as the encasement of the structural components (1).

9. Method for producing a composite component according to Claims 1 to 8, **characterised in that** die pressing is carried out as hot pressing and isostatic pressing as hot isostatic pressing.

10. Method for producing a composite component according to Claim 8, **characterised in that** a material joint between structural component (1) and canning foil (2) is produced in the individual structural component (1) by means of the hot pressing or hot isostatic pressing.

11. Method for producing a composite component according to Claims 1 to 10, **characterised in that**, prior to canning, a closed metal layer is applied by deposition from the gas phase to at least one structural component (1), at least on partial areas of the surface thereof.

12. Method for producing a composite component according to Claims 1 to 11, **characterised in that** a non-metallic structural component is canned in a common metal foil with at least one additional metal structural component and joined.

13. Method for producing a composite component according to Claims 1 to 12, **characterised in that** the canning material is completely or partly or zonally removed mechanically from the external surface of the composite component (1) after the joining.

14. Composite component, produced by the method according to Claims 1 to 13 and consisting of a plurality of structural components (1) made of metallic and/or non-metallic refractory materials, **characterised in that** said component is a component of an engine for aircraft or space missiles and has at least one non-metallic structural component (1) to which a gas-tight, 10 to 2000 µm-thick metal foil (2) is applied in a contour-following manner by means of a canning process and subsequent die pressing or isostatic pressing, this plurality of structural components (1) being joined in a connecting zone between this metal foil (2) and one of these structural components (1) by soldering, welding or by means of hot isostatic pressing.

15. Composite component according to Claim 14, **characterised in that** recesses (4) are formed as cavities (6) in the surface of a structural component (1) in the composite component.

16. Composite component according to Claim 15, **characterised in that** the cavities (6) are formed as channels for coolants flowing therethrough.

17. Composite component, produced by the method according to Claims 1 to 13 and consisting of a plurality of structural components (1) of metallic and/or non-metallic refractory materials, **characterised in that** this composite component is a rotating X-ray anode comprising at least one structural component made of a carbon-based material and at least one further structural component made of refractory metal, and **in that** a gas-tight, 10 to 2000 µm-thick metal foil (2) is applied in a contour-following manner to at least one non-metallic structural component (1) by means of a canning process and subsequent die pressing or isostatic pressing, this plurality of structural components being connected in a connecting zone between this metal foil (2) and one of these structural components by soldering, welding or by means of hot isostatic pressing.

## Revendications

1. Procédé de fabrication d'une pièce composite dans lequel au moins un élément structurel non métallique (1) est assemblé à un ou plusieurs éléments structurels métalliques (2) ou non métalliques (1) réalisés avec des matériaux à haute résistance thermique, ladite pièce composite étant pourvue ou non de cavités ménagées dans la surface, et dans lequel il est intégré, dans la pièce composite, une couche intermédiaire métallique (2) appliquée sur l'élément structurel non métallique (1), au moins au niveau de la ou des faces de jonction, par alliance de matière, **caractérisé en ce qu'**il est appliqué, sur la surface d'au moins un élément structurel (1) en un matériau non métallique à haute résistance thermique, y compris sur les superficies de cavités (4) ménagées dans ladite surface et en suivant au plus près les contours de celle-ci, une feuille métallique (2) d'une épaisseur comprise entre 10 et 2000 µm, étanche au gaz, l'application étant réalisée par mise sous gaine puis compression en matrice ou compression isostatique, et **en ce que** les différents éléments structurels (1) sont ensuite assemblés par brasage ou soudage au niveau de la ou des faces de jonction et/ou enveloppés ensemble dans une feuille métallique (2) avant de subir une compression à chaud ou compression isostatique à chaud les réunissant par alliance de matière en une pièce composite (1).

2. Procédé de fabrication d'une pièce composite selon la revendication 1, **caractérisé en ce que** le matériau mis en oeuvre pour au moins un élément structurel non métallique (1) est du carbone renforcé de fibres de carbone et/ou du graphite et/ou du carbure de silicium renforcé de fibres.

3. Procédé de fabrication d'une pièce composite selon la revendication 1 ou 2, **caractérisé en ce que** les matériaux mis en oeuvre pour au moins un élément structurel non métallique (1) sont des carbures, des nitrures et/ou de la céramique oxydée.

4. Procédé de fabrication d'une pièce composite selon l'une quelconque des revendications 1 à 3, **caractérisé en ce que** le matériau de gainage est une feuille métallique (2) d'une épaisseur comprise entre 10 et 500 µm et d'un métal à point de fusion élevé.

5. Procédé de fabrication d'une pièce composite selon la revendication 4, **caractérisé en ce que** le matériau de gainage est une feuille de Ta, de Nb ou d'un alliage à base de Ta ou de Nb.

6. Procédé de fabrication d'une pièce composite selon l'une quelconque des revendications 1 à 5, **caractérisé en ce qu'**il est assemblé, par alliance de matière, deux éléments structurels (1) comprenant des cavités en surface symétriquement inverses par rapport à la surface d'assemblage, lesdits éléments structurels étant enveloppés dans une feuille métallique (2) et réunis à celle-ci par alliance de matière.

7. Procédé de fabrication d'une pièce composite selon l'une quelconque des revendications 1 à 6, **caractérisé en ce que** la feuille métallique (2) utilisée est une feuille de tantale ou de tungstène recouverte d'un côté de rhénium, par dépôt en phase vapeur (CVD) ou dépôt en phase gazeuse (PVD).

8. Procédé de fabrication d'une pièce composite selon l'une quelconque des revendications 1 à 7, **caractérisé en ce qu'**il est utilisé comme enveloppe pour les éléments structurels (1), des feuilles métalliques (2) d'une épaisseur comprise entre 50 et 200 µm.

9. Procédé de fabrication d'une pièce composite selon l'une quelconque des revendications 1 à 8, **caractérisé en ce que** la compression en matrice est effectuée sous forme de compression à chaud et la compression isostatique sous forme de compression isostatique à chaud.

10. Procédé de fabrication d'une pièce composite selon la revendication 8, **caractérisé en ce qu'**il est réalisé, individuellement pour chaque élément structurel, par le biais de la compression à chaud ou de la compression isostatique à chaud, une jonction par alliance de matière entre ledit élément structurel (1) et la feuille de gainage (2).

11. Procédé de fabrication d'une pièce composite selon l'une quelconque des revendications 1 à 10, **caractérisé en ce qu'**il est appliqué par dépôt en phase vapeur, avant le gainage, une couche métallique uniforme sur au moins un élément structurel et au moins sur des secteurs partiels de la surface de celui-ci.

12. Procédé de fabrication d'une pièce composite selon l'une quelconque des revendications 1 à 11, **caractérisé en ce qu'**un élément structurel non métallique (1) et au moins un élément structurel métallique sont gainés d'une même feuille métallique et assemblés.

13. Procédé de fabrication d'une pièce composite selon l'une quelconque des revendications 1 à 12, **caractérisé en ce que**, après l'assemblage, le matériau de gainage est enlevé par usinage dé la surface externe de la pièce composite (1), soit en totalité soit partiellement ou par secteurs.

14. Pièce composite fabriquée avec le procédé selon les revendications 1 à 13 et constituée d'une pluralité d'éléments structurels (1) réalisés avec des matériaux métalliques et/ou non métalliques à haute résistance thermique, **caractérisée en ce que** ladite pièce est une pièce constitutive d'un propulseur d'avion ou d'engin spatial et **en ce que** cette pièce comprend au moins un élément structurel non métallique (1) sur lequel est appliquée, en en épousant la forme, une feuille métallique (2) de 10 à 2000 µm d'épaisseur et étanche au gaz, par gainage suivi de compression en matrice ou compression isostatique, ladite pluralité d'éléments structurels (1) étant assemblée, par brasage, soudage ou compression isostatique à chaud, au niveau d'une zone de liaison entre ladite feuille métallique (2) et l'un desdits éléments structurels (1).

15. Pièce composite selon la revendication 14, **caractérisée en ce que** des cavités (4) présentes dans la surface d'un élément structurel (1) forment des espaces creux (6) dans la pièce composite.

16. Pièce composite selon la revendication 15, **caractérisée en ce que** les espaces creux (6) sont formés pour servir de canaux destinés au passage de fluides de refroidissement.

17. Pièce composite fabriquée avec le procédé selon les revendications 1 à 13 et constituée d'une pluralité d'éléments structurels (1) réalisés avec des matériaux métalliques et/ou non métalliques à haute résistance thermique, **caractérisée en ce que** ladite pièce est une anode tournante pour tubes à rayons X, composée d'au moins un élément structurel en un matériau à base de carbone et d'au moins un autre élément structurel en métal réfractaire, et **en ce que** sur au moins un élément structurel non métallique (1), il est appliqué, en en épousant la forme, une feuille métallique (2) de 10 à 2000 µm d'épaisseur et étanche au gaz, par gainage suivi de compression en matrice ou compression isostatique, cette pluralité d'éléments structurels (1) étant assemblée, par brasage, soudage ou compression isostatique à chaud, au niveau d'une zone de liaison entre ladite feuille métallique (2) et l'un desdits éléments structurels (1).
